# EUROPEAN PATENT SPECIFICATION

(11) **EP 0 786 849 B1**
(45) Date of publication and mention of the grant of the patent: **19.04.2000**
(21) Application number: 96101176.4
(22) Date of filing: 29.01.1996
(51) Int. Cl.: H02J 7/32, H04M 1/72, H04B 1/38

(54) **Manually operated auxiliary power supply for mobile telecommunication devices**
Handbetriebene Hilfsstromversorgungseinrichtung für mobile Telekommunikationsgeräte
Alimentation auxiliaire à entraînement manuel pour des appareils de télécommunication mobiles

(43) Date of publication of application: 30.07.1997
(73) Proprietor: Labimex Limited, 1641 Nicosia (CY)
(72) Inventor: Troy, Duncan, Etchingham, East Sussex TN19 7AY (GB)
(74) Representative: Monti, Umberto

(56) References cited:
- EP-A- 0 409 819
- DE-A- 3 211 114
- US-A- 4 332 006
- US-A- 4 701 835
- US-A- 5 363 445

## Description

The present invention generally refers to the recharging of batteries or battery packs for electronic devices and apparatuses, such as mobile phones and portable VCRs.

One of the most important limitations to the usefulness of mobile phones and portable VCRs is the limited life of the battery which powers such devices. Although the invention will be disclosed with particular reference to the application in mobile phones, the invention is not to be limited to such specific use.

Although a lot of effort and research was and is being spent both in the area of phone power consumption and high power density batteries, the event of being unable to communicate because of a depleted battery is very common and often unpleasant. The battery chargers supplied with the phones do not resolve this problem because they require an electric outlet, which is often not available. Additionally they need a significant time for being charged thus limiting the mobility of the equipment, and by extension of the equipment owner.

Finally, such battery chargers are generally not built into the telephone so that they are likely to be unavailable when needed.

US-A-4 701 835 on which the preamble of claim 1 is based discloses a power supply system for an electrical, battery-operated portable device comprising a replaceable casing housing chargeable storing means, and further comprising converting means activated by a mechanical device for generating electric power to charge said chargeable storing means, the converting means further comprising a small miniaturized electric alternator the output of which is connected to Zener diodes regulating the output voltage of the alternator. This document does not disclose feeding the power generated by the alternator to an intermediate storage components which in turn trickles energy to the storing means.

EP-A-0 409 819 discloses a manually actuated dynamo to produce power while being cranked, with a revolving disk operating in both direction and powering the electric alternator. It is an object of the present invention to overcome the above mentioned drawbacks of the prior art, and more particularly to realize a power supply system in which auxiliary power is obtained by converting mechanical energy into electricity. Another object of the present invention is to provide a power supply system for a portable device, particularly a mobile telephone handset, which can be manually recharged by the user in any situation by means of a mechanical device converting mechanical energy into electric energy.

It is a further object of the present invention to provide a power supply pack including energy storing means that are (re)chargeable such as batteries or large capacitors and a miniaturized power generator allowing energy to be generated and stored in advance for future usage.

It is still an object of the present invention to provide a miniaturized electrical generator which can be operated by the user during the phone call, so that the same call can be extended irrespective of residual battery charge.

According to the invention, the above objects are accomplished by means of a power supply system for an electrical, battery-operated portable device as claimed in claim 1. Advantageously such a mechanical device includes a small crank or handle. Preferably the assembly of the power generator and the electric energy storage system is designed to fit into the shape of existing mobile phone interchangeable batteries so that the present device can be marketed as an accessory of existing mobile phones. Further additional advantageous features are claimed in the dependent claims.

The invention will now be disclosed with reference to the attached drawings that show some preferred but non limiting embodiments thereof, in which:
Fig. 1 is a perspective back view of a mobile phone set incorporating the present invention; and
Fig. 2 is block diagram of the power supply assembly of the present invention.

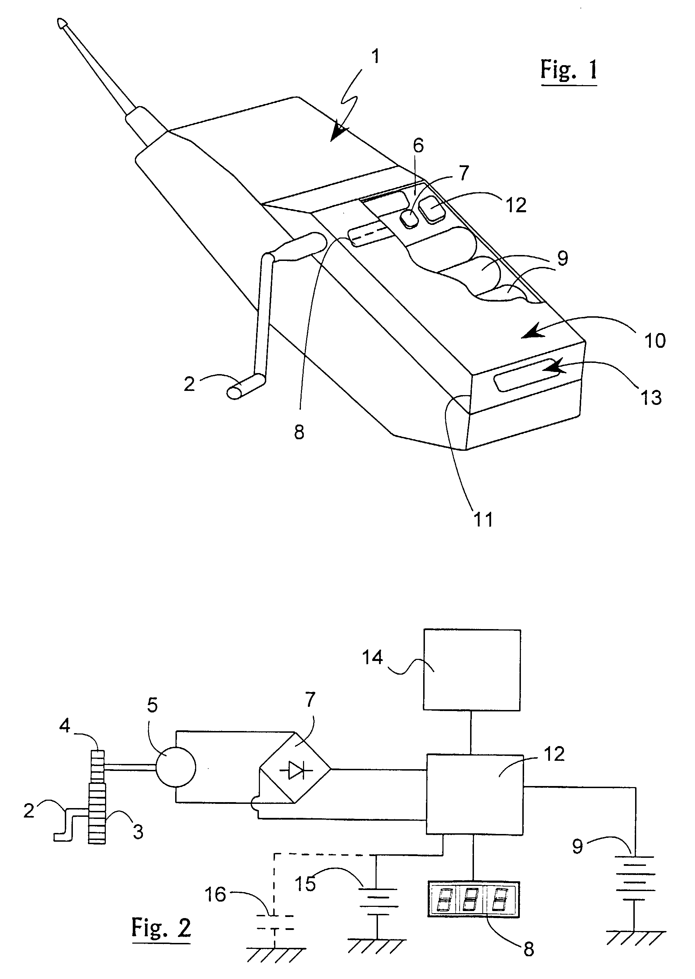

Referring now to Figures 1 and 2, a mobile telephone set 1 carries, usually in a slot in the back, an interchangeable, power supply system 10 that energizes the device. Usually such a system comprises a rechargeable battery pack, generally fitted in a slot or railing to the phone and consisting of a container 11 housing one or more batteries 9.

According to the invention, the battery pack casing or container 11 has substantially the same dimensions, shape and connections as that of a conventional rechargeable battery or battery pack feeding the telephone handset.

The container 11 further houses converting means 5 capable of generating electric power to charge said chargeable batteries 9 or other energy storing means. Preferably the converting means comprises a miniaturized electric alternator 5 the output of which is connected to a power monitoring circuit or unit 12 through an AC/DC converting component 7, preferably a high efficiency rectifier bridge, made with six Shottky diodes. The above compnents, as well as other, are mounted on a small control printed circuit 6.

The alternator 5 is driven by a mechanical arrangement comprising a handle or crankshaft 2 acting on a speed multiplier (or multiplying gearbox) 3, 4 which in turns rotate the alternator 5. The handle or crankshaft 2 can be retracted or folded away when not in use, for example in an appropriate slot 13 in the casing 11. The speed multiplier 3, 4, comprises one or two couples of gears, chosen in such a manner as to properly increase the speed obtained rotating the crankshaft. As an example, the speed ratio of the multiplier 3, 4 can turn the approximately 30 revolutions per minute which are obtained with a comfortable manual operation into 1,000-5,000 revolutions per minute needed by the miniaturized electric alternator 5.

The alternator 5, in turn, feeds electric power, typically 30 to 50 watt, 4 to 6 volt as required by the equipment, to the rectifier bridge 7 and the rectified power from the generator is fed either to the main battery 9 via a recharge control circuit 12, or alternatively to an intermediate storage component. This storage component in turn - via the recharge control circuit 12 - trickles energy more slowly into the main battery 9 whose quick recharge may be relatively inefficient. This component can either be a quick recharge battery 15, or a buffer capacitor 16 as shown with dashed lines in Fig. 2. The circuitry 14 of the telephone handset is connected to the monitoring circuit 12.

The control printed circuit 6 displays the progress of battery charge by means of a display 8 which provides information on charge effectiveness and status, and comprises either a LED bar (Fig. 1) or a LCD display (Fig. 2).

In an embodiment of the present invention, the electric power produced by the generator by rotating the crank 2 is first stored in the high recharge speed buffer battery 15, to be trickled down more slowly, but at a higher rate than the telephone use, to the main battery 9.

When using the telephone set, if a state of low battery charge is detected by the phone or by the status display 8, the user may unfold the handle 2 and rotate the generator, thus recharging the batteries 9.

Generator 5 can be a 50 W generator, which requires a manageable effort on the crank 2, a 15 seconds of manual recharge would allow for about 3-4 minutes of conversation.

On the other hand, a typical 0.4 Amperehours, 6 volts battery pack could be fully charged, if required, in about 4 minutes.

As above mentioned, in an embodiment of the present invention the batteries 15 are replaced or supplemented with ultra-high capacitance electrolytic capacitors, which provide higher charge/discharge efficiency than that of a battery, which is typically below 60% for a very fast recharge cycle. Such special electrolytic capacitor 16 can also be connected in parallel with the battery 15 to increase recharge efficiency.

In accordance with another embodiment of the invention (not shown in the drawings) the buffer battery 15 is replaced by a coil spring, which is loaded by the crank 2 and unwound slowly as the energy is required.

The mechanical device 2, 3, 4 allows continued use of the portable device irrespective of the state of the main battery 9, or even without the presence of said main battery.

Although the description was made in reference to a mobile phone application, the application is not limited to such devices, but is extended to all portable electric devices which are battery operated and which suffer from limited battery duration, such as VCRs, cassette or CD players, portable TV sets, portable torch lights, and so on.

As various changes could be made in the above system without departing from the scope of the invention, it is intended that all matter contained in the above description or shown in the accompanying drawings shall be interpreted as illustrative and not in a limiting sense.

## Claims

1. A power supply system (10) for an electrical, battery-operated portable device comprising a replaceable casing (11) housing:
- chargeable storing means (9) feeding said portable device;
- converting means (5) activated by a mechanical device (2, 3, 4) for generating electric power to charge said chargeable storing means (9), said converting means (5) comprising a small miniaturized electric alternator (5) the output of which is connected to a power monitoring circuit (12) through an AC/DC converting component (7); characterized in that said power monitoring circuit (12) is connected to an intermediate storage component (15, 16) which in turn trickles energy more slowly into said chargeable storing means (9).

2. A power supply system as claimed in claim 1, characterized in that said power monitoring circuit (12) is directly connected to said chargeable storing means (9).

3. A power supply system as claimed in claim 3, characterized in that said intermediate storage component comprises a quick charge battery (15) or a buffer capacitor (16).

4. A power supply system as claimed in claims 1 to 3, characterized in that said mechanical device includes a small crank or handle (2) coupled to a speed multiplier comprising at least one couples of gears (3, 4) driving said electric alternator (5).

5. A power supply system as claimed in claim 1, characterized in that it provides a coil spring, which is loaded by said mechanical device (2, 3, 4) and supplies mechanical energy to said alternator (5) as slowly unwinds.

6. A power supply system as claimed in the preceding claims, characterized in that it further comprises a display (8) for indicating the state of said chargeable storing means (9) .

7. A power supply system as claimed in the preceding claims, characterized in that said said portable device is a portable phone set, a torch light, or a VCR.

8. A power supply system as claimed in the preceding claims, characterized in that operation of the mechanical device allows continued use of the portable device irrespective of the state of the main battery (9).

## Patentansprüche

1. Ein Stromversorgungssystem (10) für ein tragbares Elektrogerät mit Batteriebetrieb, wobei ein austauschbares Gehäuse (11) aufweist:
- Aufladespeicherungsmittel (9) zur Versorgung des vorerwähnten tragbaren Elektrogeräts;
- Umwandlungsmittel (5) mit Betätigung über eine mechanische Einrichtung (2, 3, 4) zur Energieerzeugung und zur Aufladung der vorerwähnten Aufladespeicherungsmittel (9), wobei die vorerwähnten Umwandlungsmittel (5) einen miniaturisierten Kleinwechselstromerzeuger (5) aufweisen, dessen Ausgang mit einem Überwachungsstromkreis (12) über einen Drehstrom-Gleichstrom-Umformer (7) geschaltet wird, das - der Reihe nach - für ein langsameres Energieerhaltungsladen der Aufladespeicherungsmittel (9) sorgt.

2. Ein Stromversorgungssystem nach Anspruch 1, dadurch gekennzeichnet, daß der vorerwähnte Überwachungsstromkreis (12) mit den vorerwähnten Aufladespeicherungsmitteln (9) direkt geschaltet wird.

3. Ein Stromversorgungssystem nach Anspruch 3, dadurch gekennzeichnet, daß das vorerwähnte Zwischenspeicherelement eine Batterieschnelladung (15) oder einen Pufferkondensator (16) aufweist.

4. Ein Stromversorgungssystem nach Ansprüchen von 1 bis 3, dadurch gekennzeichnet, daß diese mechanische Einrichtung eine Kleinkurbel oder einen Griff (2) - mit einer Geschwindigkeitsvervielfacher gekoppelt - mit wenigstens einem Zahnradpaar (3, 4) zum Antreiben des vorerwähnten Elektro-Stromwechselerzeugers (5) aufweist.

5. Ein Stromversorgungssystem nach Anspruch 1, dadurch gekennzeichnet, daß eine Schraubenfeder vorliegt, die über die vorerwähnte mechanische Einrichtung dem vorgenannten Stromwechselerzeuger (5) nach einer langsamne Abwicklung versorgt.

6. Ein Stromversorgungssystem nach den vorgenannten Ansprüchen, dadurch gekennnzeichnet, daß ein Display (8) zur Zustandsangabe von den vorerwähnten Aufladespeicherungsmitteln (9) aufweist.

7. Ein Stromversorgungssystem nach den vorgenannten Ansprüchen, dadurch gekennzeichnet, daß die vorerwähnte tragbare Einrichtung ein tragbares Fernsprechapparat, eine Taschenlampe oder ein VCR sein kann.

8. Ein Stromversorgungssystem nach den vorgenannten Ansprüchen, dadurch gekennzeichnet, daß die Betätigung der mechanischen Einrichtung den Dauerbetrieb des tragbaren Geräts erlaubt, ohne den Zustand der Hauptbatterie zu berücksichtigen.

## Revendications

1. Un système d'alimentation électrique (10) pour un appareil protatif qui fonctionne sur batterie comprenant une boîte remplaçable (11) à recevoir:
- des moyens de conversion (5) actionnés par un dispositif mécanique (2, 3, 4) pour alimenter la puissance électrique auxdits moyens de stockage à charger (9), lesdits moyens de conversion (5) comprenant un petit alternateur électrique miniaturisé (5), dont la sortie est couplée à un circuit de contrôle de la puissance (12) par l'entremise d'un convertisseur c.a./c.c. (7); caractérisé en ce que ledit circuit de contrôle de la puissance (12) est couplé à un élément de stockage intermédiaire (15, 16) qui à son tour charge la puissance électrique de maintien d'une façon plus lente dans lesdits moyens de stockage à charger (9).

2. Un système d'alimentation électrique selon la revendication 1, caractérisé en ce que ledit circuiti de contrôle de la puissance (12) est couplé directement auxdits moyens de stockage à charger (9).

3. Un système d'alimentation électrique selon le revendication 3, caractérisé en ce que l'élément de stockage intermédiaire comprend une batterie de charge rapide (15) ou un condensateur tampon (16).

4. Un système d'alimentation électrique selon les revendications 1 à 3, caractérisé en ce que ledit dispositif mécanique comprend une petite manivelle ou poignée (2) couplée à un multiplicateur de vitesse comprenant au moins deux engrenages (3, 4) pour l'entraînement dudit alternateur électrique (5).

5. Un système d'alimentation électrique selon la revendication 1, caractérisé en ce qu'il fournit un ressort à boudin, qui est chargé par ledit dispositif mécanique (2, 3, 4) et alimente l'énergie mécanique audit altenateur (5) avec un lent déroulement.

6. Un système d'alimentation électrique selon les revendications précédentes, caractérisé en ce qu'il comprend - en outre - un display (8) pour indiquer l'état desdits moyens de stockage à charger (9).

7. Un système d'alimentation électrique selon les revendications précédentes, caractérisé en ce que ledit appareil portatif est un appareil téléphonique portatif, une lampe torche ou un VCR.

8. Un système d'alimentation électrique selon les revendications précédentes, caractérisé en ce que le fonctionnement du dispositif mécanique permet une utilisation en continu de l'appareil portatif sans tenir compte de l'état de la batterie principale (9).
